# Europäisches Patentamt
# European Patent Office
# Office européen des brevets

(19)

(11) Publication number: **0 215 150**
**B1**

(12)

# EUROPEAN PATENT SPECIFICATION

(45) Date of publication of the patent specification:
**11.07.90**

(21) Application number: **85111781.2**

(22) Date of filing: **18.09.85**

(51) Int. Cl.⁵: **C08L 27/08,** C08L 23/02
// (C08L27/08, 23:02,
23:08),(C08L27/08, 23:02,
23:28),(C08L23/02, 27:08,
23:08),(C08L23/02, 27:08, 23:28)

(54) Alloys of vinylidene chloride interpolymers and olefin polymers.

(43) Date of publication of application:
**25.03.87 Bulletin 87/13**

(45) Publication of the grant of the patent:
**11.07.90 Bulletin 90/28**

(84) Designated Contracting States:
**AT BE CH DE FR GB IT LI NL SE**

(56) References cited:
**US-A- 3 075 946**
**US-A- 3 076 781**
**US-A- 3 631 226**
**US-A- 4 501 848**

(73) Proprietor: **THE DOW CHEMICAL COMPANY, 2030 Dow Center Abbott Road P.O. Box 1967, Midland Michigan 48640-1967(US)**

(72) Inventor: **Burgert, Bill E., 1920 Sylvan Lane, Midland Michigan 48640(US)**
Inventor: **Ranck, Dan E., 4242 Wixom, Sanford Michigan 48657(US)**

(74) Representative: **Sternagel, Hans-Günther, Dr. et al, Patentanwälte Dr. Michael Hann Dr. H.-G. Sternagel Sander Aue 30, D-5060 Bergisch Gladbach 2(DE)**

## Description

The present invention relates to compatibilized blends of at least two normally incompatible polymers. More particularly, the present invention relates to compatibilized and melt processable blends of a vinylidene chloride interpolymer and an olefin polymer.

Vinylidene chloride interpolymers are well known for their excellent barrier to mass transport of atmospheric gases and moisture vapor. These interpolymers have limited areas of application, however, because of poor melt processing characteristics. In particular, vinylidene chloride interpolymers in a melt plasticized state have poor heat stability and low melt strength. These same interpolymers, when fabricated, tend to be brittle and to have low impact strength.

Olefin polymers, such as high density polyethylene, generally have better melt processing characteristics than vinylidene chloride interpolymers. That is, they are melt processable over a wider range of temperatures. The olefin polymers are readily fabricated into articles. They also provide rigidity without brittleness when so fabricated. Notwithstanding such processing advantages, the olefin polymers are excessively permeable to atmospheric gases.

Efforts to combine the best features of vinylidene chloride interpolymers and olefin polymers in a polymer-polymer blend have been unsuccessful. Lack of success has been determined by comparing physical properties of the polymer-polymer blend with those of the blend components in a straight line volume fraction relationship (hereinafter referred to as "the rule of mixtures"). The physical properties of the polymer-polymer blends have generally been poorer than those predicted by following the rule of mixtures.

Various explanations have been advanced to explain the aforementioned lack of success. One such explanation was that mixing procedures used to disperse one polymer in a second polymer were inadequate.

It is now believed that the lack of success may be attributed to inherent physical incompatibility of vinylidene chloride interpolymers with olefin polymers. The lack of success may also be attributed to inadequate adhesion between vinylidene chloride interpolymers and olefin polymers.

The present invention concerns a compatibilized blend of polymers comprising (a) a vinylidene chloride interpolymer and an olefin polymer in the weight ratio of (a) to (b) from 9:1 to 1:9 and a compatibilizing amount of from 2 to 35 parts per weight per hundred parts of (a) plus (b) of a compatibilizing polymer (c), wherein the interpolymer (a) having polymerized therein vinylidene chloride in an amount from 40 tp 98 percent by weight of interpolymer and at least one monoethylenically unsaturated monomer copolymerizable therewith in an amount from 60 to 2 percent by weight of interpolymer, said compatibilizing polymer (c) being selected from the group consisting of (i) ethylene interpolymers having polymerized therein from 97 to 60 weight percent of ethylene and from 3 to 40 weight percent of at least one oxygen containing species copolymerizable therwith; and (ii) olefin polymers having halogen chemically affixed thereto in an amount of from 24 to 44 percent by weight of polymer; with the further proviso that if the compatibilizing polymer (c) is an ethyloxazoline-modified ethylene/acrylic acid polymer, then said polymer prior to modification has a polymerized acrylic acid content which is greater than 3 percent by weight but less than 20 percent by weight of unmodified polymer, and the ratio of vinylidene chloride polymer to low tensity polyethylene is greater than 1:1.

The object of the invention is also attained by a process for the preparation of a compatibilized blend of polymers comprising (a) a vinylidene chloride interpolymer and an olefin polymer in the weight ratio of (a) to (b) from 9:1 to 1:9 and a compatibilizing amount of from 2 to 35 parts per weight per hundred parts of (a) plus (b) of a compatibilizing polymer (c), wherein the interpolymer (a) having polymerized therein vinylidene chloride in an amount from 40 to 98 percent by weight of interpolymer and at least one monoethylenically unsaturated monomer copolymerizable therewith in an amount from 60 to 2 percent by weight of interpolymer, said compatibilizing polymer (c) being selected from the group consisting of (i) ethylene interpolymers having polymerized therein from 97 to 60 weight percent of ethylene and from 3 to 40 weight percent of at least one oxygen containing species copolymerizable therewith; and (ii) olefin polymers having halogen chemically affixed thereto in an amount of from 24 to 44 percent by weight of polymer; with the further proviso that if the compatibilizing polymer (c) is an ethyloxazoline-modified ethylene/acrylic acid polymer, then said polymer prior to modification has a polymerized acrylic acid content which is greater than 3 percent by weight but less than 20 percent by weight of unmodified polymer and the ratio of vinylidene chloride polymer to low density polyethylene is grater than 1:1, characterized in that the admixture of said three polymeric components (a), (b) and (c) is melt blended at the temperature below that at which decomposition of the vinylidene chloride interpolymer becomes significant and under shear sufficient to provide a visually homogeneous blend within reasonable mixing time.

Vinylidene chloride interpolymers suitable for use with the present invention are those which have polymerized therein an amount of vinylidene chloride monomer and an amount of monoethylenically unsaturated monomer copolymerizable therewith. The vinylidene chloride interpolymers are desirably melt processible.

The amount of polymerized vinylidene chloride monomer is from 40 to 98 percent by weight of interpolymer, beneficially from 50 to 96 percent by weight of interpolymer, and desirably from 60 to 94 percent by weight of interpolymer.

The vinylidene chloride interpolymer comprises one or more monoethylenically unsaturated monomers which are copolymerizable with the vinylidene chloride monomer. The amount of monoethylenically unsaturated monomer is from 60 to 2 percent by weight of interpolymer, beneficially from 50 to 4 percent by weight of interpolymer, and desirably from 40 to 6 percent by weight of interpolymer.

Monoethylenically unsaturated monomers suitable for copolymerization with vinylidene chloride include vinyl chloride, alkyl acrylates, alkyl methacrylates, acrylic acid, methacrylic acid, itaconic acid, acrylonitrile and methacrylonitrile. The unsaturated monomers are desirably selected from the group consisting of vinyl chloride, alkyl acrylates and alkyl methacylates, the alkyl acrylates and alkyl methacrylates having from 1 to 8 carbon atoms per alkyl group. The alkyl acrylates and alkyl methacrylates beneficially have from 1 to 4 carbon atoms per alkyl group. The alkyl acrylates and alkyl methacrylates are preferably selected from the group consisting of methyl acrylate, ethyl acrylate and methyl methacrylate.

Olefin polymers suitable for use in the present invention are those olefin homopolymers and interpolymers which can be compatibilized with the vinylidene chloride interpolymers through the use of the compatibilizing polymers of the present invention.

Beneficially, the olefin polymers are selected from the group consisting of (1) low density polyethylene, (2) medium density polyethylene, (3) high density polyethylene, (4) polypropylene, (5) poly 1-butene, (6) generally linear interpolymers of ethylene having polymerized therein from 2 to 98 weight percent of ethylene and from 98 to 2 weight percent of at least one 1-alkene, said alkene having from 3 to 18 carbon atoms, (7) copolymers of two or more alpha-olefins, having from 3 to 18 carbon atoms per molecule, (8) rubbery ethylene-propylene-diene monomer interpolymers, and mixtures thereof.

Low density polyethylenes which are useful in the present invention have a density of from 0.917 to 0.929 grams per cubic centimeter. The low density polyethylenes also have a melt index of from 0.1 to 20 grams per 10 minutes as measured in accordance with American Society for Testing and Materials (ASTM) Test D-1238.

Medium density polyethylenes which are useful in the present invention have a density of from 0.930 to 0.939 grams per cubic centimeter. The medium density polyethylene also have a melt index of from 0.08 to 100 grams per 10 minutes (ASTM Test D-1238).

High density polyethylenes which are useful in the present invention have a density of from 0.940 to 0.965 grams per cubic centimeter. The high density polyethylenes also have a melt index of from 0.08 to 100 grams per 10 minutes (ASTM Test D-1238).

For purposes of the present invention, useful polypropylenes are the normally solid isotactic polypropylenes. The isotactic polypropylenes have an insolubility in hot heptane of greater than 90 percent. These polypropylenes also have a melt flow rate of from 0.3 to 35 grams per 10 minutes at a temperature of 230°C with a load of 2160 grams. The polypropylene beneficially has a melt flow rate of from 0.3 to 12 grams per 10 minutes.

Any poly 1-butene is believed to be suitable for use in the percent invention so long as it meets the other requirements for the olefin polymer.

For purposes of the present invention, the linear interpolymers of ethylene have polymerized therein an amount of ethylene and an amount of at least one 1-alkene. The amount of ethylene is suitably from 2 to 98 percent, by weight of the interpolymer. The amount of 1-alkene is suitably from 98 to 2 percent, by weight of interpolymer.

The 1-alkene is selected from the group of 1-alkenes which have from 3 to 18 carbon atoms per molecule. The 1-alkene is beneficially selected from the group of 1-alkenes which have from 3 to 10 carbon atoms per molecule. The 1-alkenes having from 3 to 10 carbon atoms per molecule include propene, butene, hexene and octene.

A beneficial ethylene/1-alkene interpolymer is an ethylene/propylene copolymer. The ethylene/propylene copolymer has polymerized therein ethylene in an amount of up to 50 percent by weight of copolymer and propylene in an amount of up to 98 percent by weight of copolymer. The ethylene/propylene copolymer suitably has a melt index of greater than 0.1 grams per 10 minutes (ASTM D-1238). Desirable results are obtained when the ethylene/propylene copolymer has a melt index of from 0.4 to 4.0 grams per 10 minutes (ASTM D-1238). Because polyethylene and polypropylene are both useful materials for purposes of the present invention, it is believed that any ratio of ethylene to propylene in an ethylene/propylene copolymer would also be useful.

Linear copolymers of ethylene and another olefin are described in US -A 4,076,698.

Alpha-olefin interpolymers suitable for use with the present invention have polymerized two or more monomers selected from the group of alpha-olefin monomers having from 3 to 18 carbon atoms per molecule. The alpha-olefin monomers are represented by the general formula $R-CH=CH_2$ wherein R is an alkyl group of 1 to 16 carbon atoms.

Examples of suitable alpha-olefin monomers include propylene, 1-butene, 1-pentene, 1-hexene, 1-heptene, 1-octene, 1-nonene, 1-decene, 4-methyl-1-pentene, 4-methyl-1-hexene and 4, 4-dimethyl-1-pentene.

Rubbery ethylene-propylene-diene monomer interpolymers useful for purposes of the present invention have polymerized therein (a) ethylene in an amount of from 20 to 90 percent by weight of interpolymer, (b) propylene in an amount of from 10 to 80 percent by weight of interpolymer and (c) a nonconjugated diene in an amount of from 2 to 25 percent by weight of interpolymer Processes for preparing these interpolymers are disclosed in US -A (s) 3,957,919; 3,657,395; and 4,156,767.

Examples of suitable nonconjugated dienes include dicyclopentadiene, methyltetrahydroindene, methylene norbornene, ethylidene norbornene, and 1,4-hexadiene. Beneficial results are obtained when the nonconjugated diene is either ethylidene norbornene or dicyclopentadiene. Desirably, the nonconjugated diene is dicyclopentadiene and has an iodine value of at least 20.

The rubbery ethylene-propylene-diene monomer interpolymers hereinabove specified suitably have a Mooney viscosity (ML 1+4 at 125° Centigrade) of from 35 to 75 beneficially from 45 to 65 and a specific gravity of from 0.86 to 0.88.

The compatibilizing polymer is selected from the group consisting of (i) ethylene interpolymers having polymerized therein from 97 to 60 weight percent of ethylene and from 3 to 40 weight percent of at least one oxygen containing species copolymerizable therewith; and (ii) olefin polymers having halogen chemically affixed thereto in an amount of from 24 to 44 percent by weight of polymer. Preferably the compatibilizing polymer is a copolymer of ethylene and methyl acrylate, the copolymer having polymerized therein ethylene in an amount of from 95 to 80 percent by weight of copolymer and methyl acrylate in an amount of from 5 to 20 percent by weight of copolymer.

The compatibilizing polymer must be capable of compatibilizing a blend of the vinylidene chloride interpolymer and the olefin polymer. For the purposes of this application the blend of vinylidene chloride interpolymer and olefin polymer is considered compatibilized when the blend has mechanical properties which are generally better than those suggested by the rule of mixtures. Specifically, the impact strength of the blend should be better than suggested by the rule of mixtures in order to say the blend is compatibilized. The oxygen permeability of compatibilized blends according to the present invention will be less than 1.76 cubic centimeters of oxygen times centimeters of sample thickness divided by the product of (a) area in square centimeters (b) one second, and (c) barometric pressure in 13.3 mbar (centimeters of mercury). Preferably said compatible blend has an impact energy which is greater than the impact energy of a blend of the vinylidene chloride interpolymer and the olefin polymer.

Beneficially the compatibilizing polymer will meet two additional criteria. First, it will be melt processible with the vinylidene chloride interpolymer. Second, it will have a melt index or melt viscosity which is sufficiently close to that of the olefin polymer to allow adequate mixing to occur within a reasonable processing time.

In determining whether or not the compatibilizing polymer is melt processible with the vinylidene chloride interpolymer, two factors are of prime importance. The two factors, which are interrelated, are processing time and processing temperature. In melt processing polymers, it is generally recognized that as processing temperatures increase, processing times must decrease in order to avoid undesirable results such as polymer degradation. This is especially true for vinylidene chloride interpolymers

Vinylidene chloride interpolymers may be melt processed at temperatures of up to 200°C provided processing time is less than one minute. Temperatures greater than 200°C may be employed provided the processing time is sufficiently short and provided the vinylidene chloride polymer is not in contact with iron or black plate steel. For example, vinylidene chloride polymers are melt processible at temperatures as high as 230°C at processing times of less than ten seconds when the vinylidene chloride polymer forms an inner layer in a coextruded structure.

Melt index or melt viscosity differences affect both ease of mixing and mixing times. If the melt index of the compatibilizing polymer is nearly equal to that of the olefin polymer, mixing is generally easy and is accomplished in a relatively short period of time. All other conditions being equal, as melt index disparity increases, mixing times also increase whereas ease of mixing decreases.

The first class of compatibilizing polymer, (i), are ethylene interpolymers having polymerized therein from 97 to 60 weight percent of ethylene and from 3 to 40 weight percent of at least one oxygen containing species copolymerizable therewith. The ethylene interpolymer is suitably selected from the group consisting of (a) ethylene interpolymers having polymerized therein from 97 to 60 weight percent of ethylene and from 3 to 40 weight percent of at least one ethylenically unsaturated carboxylic acid monomer copolymerizable therewith, the interpolymer being esterified after preparation thereof; (b) copolymers of ethylene and at least one alkyl acrylate; (c) copolymers of ethylene and at least one alkyl methacrylate; (d) copolymers of ethylene and carbon monoxide; (e) interpolymers of ethylene carbon monoxide and 1) an ester of an ethylenically unsaturated carboxylic acid or 2) vinyl acetate; (f) copolymers of ethylene and vinyl acetate; (g) ethyl oxazoline modified copolymers of ethylene and acrylic acid; (h) interpolymers of ethylene, carbon monoxide and acrylic acid; (i) interpolymers of ethylene, carbon monoxide and methacrylic acid; and (j) interpolymers of ethylene, carbon monoxide and vinyl acetate. Beneficially, the ethylene interpolymer is either (a), (b), (c), (d), (e), or (f).

Desirable results are obtained when the ethylene interpolymer has polymerized therein from 97 to 60 weight percent of ethylene and from 3 to 40 weight percent of at least one ethylenically unsaturated carboxylic acid monomer copolymerizable therewith, the interpolymer being esterified after preparation thereof.

Suitable ethylenically unsaturated carboxylic acid monomers copolymerizable with ethylene include acrylic acid, methacrylic acid, and the like. Preferably, the unsaturated carboxylic acid monomer is acrylic acid.

4

Desirable results are also obtained when the ethylene interpolymer is selected from the group consisting of ethylene/alkyl acrylate and ethylene/alkyl methacrylate copolymers wherein the alkyl group contains from 1 to 8 preferably, from 1 to 4 carbon atoms; and ethyl oxazoline modified copolymers of ethylene and acrylic acid.

Ethylene/acrylic acid copolymers are suitably prepared as outlined in US-A (s) 3,520,861 and 4,351,931. Methods of esterifying such copolymers are well-known in the prior art.

Preferred ethylene/acrylic acid copolymers, prior to esterification, have polymerized therein acrylic acid in an amount of from 6 to 30 percent by weight of the copolymer, The ethylene/acrylic acid copolymers also have a melt index, measured in accordance with American Society for Testing and Materials (ASTM) Test D-1238 of from 0.01 to 100 decigrams per minute.

Copolymers of ethylene with either alkyl acrylates or alkyl methacrylates are readily prepared using conventional technology. One process for preparing such copolymers is disclosed in US-A 2,497,323.

Copolymers of ethylene and carbon monoxide are also readily prepared using conventional technology. Processes for preparing ethylene/carbon monoxide copolymers are disclosed in US-A (s) 4,024,325; 4,024,326; and 4,143,096.

Interpolymers of ethylene, carbon monoxide and (1) an ester of an ethylenically unsaturated carboxylic acid or (2) vinyl acetate are prepared using the process suitable for preparation of copolymers of ethylene and carbon monoxide.

Ethyl oxazoline modified copolymers of ethylene and acrylic acid are suitably prepared by contacting ethylene/acrylic acid copolymers with an excess of ethyl oxazoline at a temperature of from 110 to 120 °C for a period of from 2 to 24 hours.

Methods of producing copolymers of ethylene and vinyl acetate; interpolymers of ethylene, carbon monoxide, and acrylic acid; interpolymers of ethylene carbon monoxide and methacrylic acid; and interpolymers of ethylene, carbon monoxide, and vinyl acetate are well-known in the art and need not be detailed here.

The second class of compatibilizing polymers are olefin polymers having halogen chemically affixed thereto in an amount of from 24 to 44 percent by weight of polymer. Olefin polymers having halogen chemically affixed thereto suitably have chlorine as the halogen.

The term "olefin polymer" is meant to include olefin homopolymers and olefin interpolymers. Suitable olefin polymer are formed from one or more olefin monomers having from 2 to 18 carbon atoms.

Beneficial compatibilizing olefin polymers include olefin homopolymers formed from a mono-olefin monomer having from 2 to 4 carbon atoms. Exemplary of such olefin homopolymers are polyethylene, polypropylene and polybutylene. Preferred olefin homopolymers are the polyethylene resins. The olefin homopolymers have halogen chemically affixed thereto.

Beneficial compatibilizing olefin polymers also include olefin interpolymers formed from at least one mono-olefin monomer having from 2 to 4 carbon atoms and up to 98 weight percent of at least one 1-alkene monomer having from 4 to 18 carbon atoms. A preferred group of olefin interpolymers contain at least 90 mole percent of ethylene and 10 mole percent of at least one 1-alkene having from 4 to 18 carbon atoms. Exemplary of suitable 1-alkenes are 1-butene, octene, 1,7-octadiene and the like. Another preferred olefin interpolymer comprises two mono-olefin monomers having from 2 to 4 carbon atoms. Exemplary of such interpolymers are interpolymers of ethylene and propylene. The olefin interpolymers have halogen chemically affixed thereto.

The compatibilizing olefin polymers having chlorine as the halogen chemically affixed thereto suitably have a chemically combined chlorine content of from 24 two 44 percent by weight of polymer. The resins also have a heat of fusion of from 2 to 13 calories per gram and a melt viscosity of from 800 to 2000 Pas (8,000 to 20,000 poise). Melt viscosity is determined using a capillary rheometer at a temperature of 190°C, a shear rate of 145 reciprocal seconds and a capillary size of .127 by 5.08 centimeters.

The compatibilizing olefin polymers, prior to chlorination, suitably have a weight average molecular weight of less than 1, 000, 000 grams per mole, beneficially between 20,000 and 300,000 grams per mole.

The compatibilizing olefin polymers are suitably prepared under the influence of catalyst systems comprising admixtures of strong reducing agents, such as triethyl aluminium, and compounds of groups IV-B, V-B and VI-b metals of the Periodic System, such as titanium tetra-chloride, and the like.

Desirable compatibilizing olefin polymers are the chlorinated polyethylenes. Chlorinated polyethylene resins desirable for use with the present invention are prepared by suspension chlorination as disclosed in US-A 3,454,544.

The present invention is not restricted to chlorinated polyethylene resins prepared by suspension or slurry chlorination processes. Solution chlorination and bulk, or fluidized bed, chlorination procedures may also be used provided the interpolymers produced thereby meet the aforementioned requirements with regard to chlorine content, heat of fusion and melt viscosity.

The compatibilized blends of the present invention are readily prepared by using conventional melt processing techniques provided two conditions are met. First, melt processing must be accomplished at a temperature below that at which decomposition of the vinylidene chloride interpolymer becomes significant. Second, sufficient shear must be generated during melt processing to provide a visually homogeneous blend within a reasonable mixing time.

Conventional melt processing equipment which may be used includes heated two roll compounding mills, Brabender mixers, Banbury mixers, single screw extruders, twin screw extruders, and the like. Desirable results are obtained when an extruder, either single screw or twin screw, is used for melt processing the compatibilized blends of the present invention.

One factor in determining satisfactory mixing times is the melt index of the components of the compatibilized blend. If component melt indexes are nearly equal, a relatively short mixing time yields satisfactory results. If there is a disparity among component melt indexes, a longer mixing time is necessary.

A second factor in determining satisfactory mixing times is mixing shear rate. All other parameters being equal, a relatively low shear rate is needed when the components have a relatively low viscosity or a high melt index. Conversely, a relatively high shear rate is needed when the components have a relatively high viscosity or a low melt index. By way of example, only, a blend comprising a high melt index low density polyethylene requires a much shorter mixing time than a blend comprising a low melt index high density polyethylene.

A third factor in determining satisfactory mixing times is temperature. As noted hereinbefore, an upper limit on temperature is the temperature at which decomposition of the vinylidene chloride interpolymer becomes significant. A lower limit on temperature is dictated by the polymer blend component which has the greatest melting point. If the temperature does not exceed the melting point of that polymer blend component, a visually homogeneous melt will be difficult, if not impossible, to obtain.

A fourth factor in determining satisfactory mixing times is mixing efficiency of the melt processing equipment. Certain melt processing equipment mixes more efficiently than other melt processing equipment. Selection of melt processing equipment which will produce a visually homogeneous melt within a reasonable processing time is, however, not difficult and can be accomplished without undue experimentation.

A fifth factor in determining satisfactory mixing times is polymer feed form. The polymeric components of the compatible blends are generally available either in finely divided powder form or in pellet form. Either form is suitable for purposes of the present invention. The pellet form, if available, is preferred over the powder form.

A variety of additives may be added to the compatibilized blends of the present invention. Additive type and amounts thereof will depend upon several factors. One factor is the intended use of the blends. A second factor is tolerance of the blends for the additives. That is, how much additive can be added before physical properties of the blends are adversely affected to an unacceptable level. Other factors are apparent to those skilled in the art of polymer formulation and compounding.

Additives which may be incorporated into the compatibilized blends of the present invention are selected from the group consisting of plasticizers, heat stabilizers, light stabilizers, pigments, processing aids, lubricants and the like. Each of these additives is known and several types of each are commercially available.

The compatibilized blends can be used to form a variety of cast, blown, extruded, molded, injection molded, or calendered articles. Physical properties of the blends depend largely upon two factors. One factor is selection of the polymer components of the compatibilized blends. A second factor is the ratio of polymer components to each other within said compatibilized blends.

The present invention is illustrated in further detail by the following examples and comparative examples. The examples and comparative examples are for purposes of illustration only and are not to be construed as limiting the scope of the present invention. All parts and percentages are by weight unless otherwise specifically noted.

Blend Preparation

Three polymeric components (a) a vinylidene chloride interpolymer, (b) an olefin polymer and (c) a compatibilizing polymer, each of which was in pellet form, were dry blended to form a visually uniform admixture. Blending was accomplished by placing the components in a bag and then shaking them. More sophisticated equipment could have been used but was not necessary. The admixture was then fed to an extruder via a rate controlled feeding mechanism. Each of the polymeric components used in the examples and comparative examples is described hereinafter at Table I.

Melt blending of the admixture was accomplished in two stages using one of two extruders. One extruder, hereinafter designated as "Extruder A", was a 1.90 centimeter single screw Brabender extruder. Extruder A had a length to diameter ratio of 20:1. It had the following set temperatures: (a) hopper temperature = 160°C; (b) melt zone temperature = 165°C; and (c) die temperature = 170°C. A second extruder, hereinafter designated as "Extruder B , was a 5.08 centimeter single screw Hartig extruder. Extruder B had a length to diameter ratio of 12:1. It had the following set temperatures: (a) hopper temperature = 165°C; (b) melt zone temperature = 170°C: and (c) die temperature = 175°C.

In a first stage, the admixture was added to the extruder hopper and thereafter converted to a molten blend. The molten blend, or preliminary blend, was extruded through a single strand die, passed through a water bath, and then pelletized. The strand die had an internal diameter of 0.32 centimeter. Pelletizing was accomplished using a Model 304, 15.24 centimeter strand cutter commercially available from Conair Incorporated.

In a second stage, which was used to promote complete mixing, a tape die was substituted for the strand die. The pelletized preliminary blend was added to the extruder hopper and thereafter converted to a molten blend. This molten blend was extruded through the tape die to form a tape having a width of 5.08 centimeters and a thickness of 0.42 centimeters. The tape was cut directly from the tape die using a pair of scissors into strips having a length of from 20 to 26 centimeters. The strips were laid on a clean smooth surface to cool. The surface used was chrome plated steel. Other surfaces known to those skilled in the art could also have been used.

Compression Molding to Prepare Impact Test Specimens

A stainless steel template measuring 16.5 centimeters by 16.5 centimers by 0.16 centimeters was used to prepare a sample sheet from which impact test samples were cut. A "sandwich" was created by (a) placing the template on a sheet of polyester film having a thickness of 0.009 centimeter, (b) placing 65 grams of the strips side-by-side in the template, and (c) covering the template and strips with a second sheet of polyester film.

The sandwich was placed into a compression molding press. It was first processed for a period of one minute at a temperature of 175-180°C and at a force of about 909 kilograms. The sandwich was then processed for an additional period of two minutes at the same temperature but at a force of $15 \times 104$ N (15,909 kilograms), After the additional period, the sandwich was allowed to cool to a temperature of about 25°C before being removed from the press. The sample sheet was then separated from the sandwich.

Instrumented Puncture Impact test specimens were prepared by using a band saw to cut the sample sheet into square pieces measuring 5.08 centimeters on a side. The test specimens were then annealed, conditioned and subjected to impact testing as hereinafter detailed.

Test Specimen Annealing

The impact test specimens were annealed by being subjected to a set temperature of about 60°C for a period of 16 hours in a convection air oven. The oven was commercially available from Precision Scientific, Incorporated under the trade designation Model 625.

Impact Test Specimen Conditioning

After being annealed, the impact test specimens were further conditioned prior to impact testing. Further conditioning was accomplished in a controlled humidity room having a relative humidity of $50 \pm 5$ percent and a temperature of $23 \pm 2$°C for a period of 24 hours.

Instrumented Puncture Impact Testing

Impact testing was done with a High Rate Impact Tester commercially available from Rheometrics, Incorporated under the trade designation RIT-8000. Specimens were tested at a temperature of $23 \pm 2$°C with a ram speed of 20,320 centimeters per minute.

Compression Molding to Prepare Oxygen Permeability Test Specimens

Permeability test specimens having a thickness of from 0.013 to 0.018 centimeters were prepared by using a modification of the procedure set forth hereinabove with respect to preparation of impact test specimens. The procedure was modified by eliminating the stainless steel template so that the strips were placed between the two sheets of polyester film to form the sandwich. After compression molding, permeability test specimens were cut from the sheet using a pair of scissors.

The test specimens were annealed using the procedure set forth hereinabove with respect to the impact test specimens.

Oxygen Permeability Testing

Oxygen permeability of the compression molded samples was measured using an instrument commercially available from Modern Controls, Incorporated, under the trade designation Oxtran 1050. Oxygen permeability measurements were made at 40°C, 50°C and 60°C and then extrapolated to 25°C.

Temperature dependence of permeability is known to be represented by an equation of the form $P = P_o$ raised to the exponent of $(-E_a/RT)$ where

$P$ = permeability
$P_o$ = a constant
$Ea$ = activation energy of permation
$R$ = gas constant
$T$ = absolute temperature

From the equation, it is apparent that permeability increases rapidly with increasing temperature. Accordingly, an Arrhenius plot at several elevated temperatures (log P vs 1/T, wherein P and T are as identified herein above) can be used to extrapolate to permeabilities at lower temperatures. Extrapolation is valid so long as there is no transitions over the range of temperatures selected for taking measurements.

Those skilled in the art recognize that oxygen permeability values obtained from compression molded samples may vary from the values obtained by testing samples prepared in a different manner. Compression molded sample data is, however, a valid basis for comparison.

Polymers used in preparing polymer blends of the examples and comparative examples are set forth hereinafter in Table I.

## TABLE I

### Polymer Components

| Code | Polymer Description |
|------|---------------------|
| VDC-1 | A vinylidene chloride copolymer resin having polymerized therein 85 percent vinylidene chloride and 15 percent vinyl chloride, both percentages being based upon copolymer weight. The copolymer had a melt point of 161°C and a weight average molecular weight of 90,000 grams per mole. The copolymer was commercially available from The Dow Chemical Company. |
| VDC-2 | A vinylidene chloride copolymer resin having polymerized therein 85 percent vinylidene chloride and 15 percent vinyl chloride, both percentages being based upon copolymer weight. The copolymer had a melt point of 161°C and a weight average molecular weight of 110,000 grams per mole. The copolymer was commercially available from The Dow Chemical Company. |
| VDC-3 | A vinylidene chloride copolymer resin having polymerized therein 88 percent vinylidene chloride and 12 percent vinyl chloride, both percentages being based upon copolymer weight. The copolymer had a melt point of 172°C and a weight average molecular weight of 100,000 grams per mole. The copolymer was commercially available from The Dow Chemical Company. |
| VDC-4 | A vinylidene chloride copolymer resin having polymerized therein 88 percent vinylidene chloride and 12 percent vinyl chloride, both percentages being based upon copolymer weight. The copolymer had a melt point of 172°C and a weight average molecular weight of 70,000 grams per mole. The copolymer was commercially available from The Dow Chemical Company. |

| Code | Polymer Description |
|------|---------------------|
| VDC-5 | A vinylidene chloride copolymer resin having polymerized therein 86 percent vinylidene chloride and 14 percent vinyl chloride, both percentages being based upon copolymer weight. The copolymer had a melt point of 140°C and a weight average molecular weight of 130,000 grams per mole. The copolymer was commercially available from The Dow Chemical Company. |
| VDC-6 | A vinylidene chloride copolymer resin having polymerized therein 94 percent vinylidene chloride and 6 percent methyl acrylate, both percentages being based upon copolymer weight. The copolymer had a melt point of 160°C and a weight average molecular weight of 120,000 grams per mole. The copolymer was commercially available from The Dow Chemical Company. |
| LDPE | A low density polyethylene resin having a density, determined in accordance with American Society for Testing and Materials (ASTM) Test D-792, of 0.92 grams per cubic centimeter and a melt index (ASTM Test D-1238) of 2 decigrams per minute. The resin was commercially available from The Dow Chemical Company under the trade designation PE 641. |
| HDPE | A high density polyethylene resin having a density (ASTM Test D-1505) of 0.965 grams per cubic centimeter and a melt index, (ASTM Test D-1238) of 0.8 decigrams per minute. The resin was commercially available from The Dow Chemical Company under the trade designation HDPE 12065. |
| PP | A polypropylene resin having a density of 0.902 grams per cubic centimeter (ASTM Test D-792 A-2) and a melt flow rate of 0.4 grams per ten minutes (ASTM Test D-1238). The resin was commercially available from Hercules Incorporated under the trade designation Pro-Fax™ 6823. |

| Code | Polymer Description |
|------|---------------------|
| PB | A polybutylene resin having a denisty of 0.895 grams per cubic centimeter (ASTM Test D-792) and a melt index of 2.0 grams per ten minutes (ASTM Test D-1238). The resin was commercially available from Shell Chemical Company under the trade designation WBS-085. |
| LLDPE | A linear low density polyethylene resin having a density of 0.920 grams per cubic centimeter (ASTM Test D-792) and a melt index of 1.0 grams per ten minutes (ASTM Test D-1238). The resin was commerially available from The Dow Chemical Company under the trade designation Dowlex® 2045. |
| EP | An ethylene-propylene copolymer resin having a density of 0.899 grams per cubic centimeter (ASTM Test D-792A-2) and a melt flow rate of 4 grams per ten minutes (ASTM Test D-1238). The resin was commercially available from Hecules Incorporated under the trade designation Pro-Fax$^{TM}$ 7531. |
| EPDM | An ethylene/propylene/ethylidene norbornene terpolymer resin having a raw Mooney Viscosity (ML 1 + 4 at 125° Centigrade) of 55 and a specific gravity of 0.86. The resin was commercially available from Copolymer Rubber and Chemical Corporation under the trade designation Epsyn® 5508 EPDM. |
| EMMA | An ethylene-methylmethacrylate copolymer resin having a polymerized methylmethacrylate content of 14.2 percent by weight of copolymer and a melt index (ASTM Test D-1238) of 3.8 grams per ten minutes. |
| EMA-1 | An ethylene/methyl acrylate copolymer resin having polymerized therein 95 percent ethylene and 5 percent methyl acrylate, both percentages being based upon copolymer weight. The copolymer was commercially available from Gulf Oil Chemical Company under the trade designation TD-1345. |

| Code | Polymer Description |
|---|---|
| EMA-2 | An ethylene/methyl acrylate copolymer having polymerized therein 91.9 percent ethylene and 8.1 percent methyl acrylate, both percentages being based upon copolymer weight. The copolymer had a melt index (ASTM Test D-1238) of 2.4 decigrams per minute. |
| EMA-3 | An ethylene/methyl acrylate copolymer having polymerized therein 91.1 percent ethylene and 8.9 percent methyl acrylate, both percentages being based upon copolymer weight. The copolymer had a melt index (ASTM Test D-1238) of 8.9 decigrams per minute. |
| EMA-4 | An ethylene/methyl acrylate copolymer having polymerized therein 80 percent ethylene and 20 percent methyl acrylate, both percentages being based upon copolymer weight. The copolymer had a melt index (ASTM Test D-1234) of 6.0 grams per ten minutes and density (ASTM D-1505) of 0.942 grams per cubic centimeter. The copolymer was commercially available from Gulf Oil Chemical Company under the trade designation PE 2207T. |
| EMA-5 | An ethylene/methyl acrylate copolymer having polymerized therein 80 percent ethylene and 20 percent methyl acrylate, both percentages being based upon copolymer weight. The copolymer had a melt index (ASTM Test D-1238) of 2.4 grams per ten minutes and a density (ASTM Test D-1505) of 0.942 grams per cubic centimeter. The copolymer was commercially available from Gulf Oil Chemical Company under the trade designation PE 2205. |
| EEA-1 | An ethylene/ethyl acrylate copolymer having polymerized therein 85 percent ethylene and 15 percent ethyl acrylate, both percentages being based upon copolymer weight. The copolymer had a melt index (ASTM Test D-1238) of 1.5 grams per ten minutes and a density (ASTM Test D-1505) of 0.930 grams per cubic centimeter. The copolymer was commercially available from Union Carbide under the trade designation DPDA 6182. |
| EEA-2 | An ethylene/ethyl acrylate copolymer having polymerized therein 85 percent ethylene and |

11

| Code | Polymer Description |
|------|---------------------|
| | 15 percent ethyl acrylate, both percentages being based upon copolymer weight. The copolymer had a melt index (ASTM Test D-1238) of 6.0 grams per 10 minutes and a density (ASTM Test D-1505) of 0.931 grams per cubic centimeter. The copolymer was commercially available from Union Carbide under the trade designation EEA 6169. |
| m/EAA-1 | A 2-ethyl-2-oxazoline modified polymer of ethylene and acrylic acid. The polymer had polymerized therein ethylene in an amount of 97 percent and acrylic acid in an amount of 3 percent, both percentages being based upon polymer weight. The polymer, prior to modification, had a melt index (ASTM D-1238) of 11 grams per 10 minutes. |
| m/EAA-2 | A 2-ethyl-2-oxazoline modified polymer of ethylene and acrylic acid. The polymer had polymerized therein ethylene in an amount of 93.5 percent and acrylic acid in an amount of 6.5 percent, both percentages being based upon polymer weight. The polymer, prior to modification, had a melt index (ASTM D-1238) of 5.5 grams per 10 minutes. |
| m/EAA-3 | A 2-ethyl-2-oxazoline modified polymer of ethylene and acrylic acid. The polymer had polymerized therein ethylene in an amount of 91 percent and acrylic acid in an amount of 9 percent, both percentages being based upon polymer weight. The polymer, prior to modification, had a melt index (ASTM D-1238) of 10 grams per 10 minutes. |
| m/EAA-4 | A 2-ethyl-2-oxazoline modified polymer of ethylene and acrylic acid. The polymer had polymerized therein ethylene in an amount of 80 percent and acrylic acid in an amount of 20 percent, both percentages being based upon polymer weight. The polymer, prior to modification, had a melt index (ASTM D-1238) of 300 grams per 10 minutes. |
| EAA-1 | An ethylene/acrylic acid copolymer having polymerized therein 93.5 percent ethylene and 6.5 percent acrylic acid, both percentages being based upon copolymers weight. The |

| Code | Polymer Description |
|------|---------------------|
| | copolymer had a density (ASTM Test D-792) of 0.932 grams per cubic centimeter and a melt index (ASTM Test D-1238) of 5.5 grams per ten minutes. The copolymer was commercially available from The Dow Chemical Company under the trade designation EAA Resin 455. |
| EAA-2 | An ethylene/acrylic acid copolymer having polymerized therein 91 percent ethylene and 9 percent acrylic acid, both percentages being based upon copolymers weight. The copolymer had a melt index (ASTM Test D-1238) of 10 grams per ten minutes. The copolymer was commercially available from The Dow Chemical Company under the trade designation XO 2375.43. |
| ECO-1 | An ethylene/carbon monoxide copolymer having polymerized therein 99 percent ethylene and 1 percent carbon monoxide, both percentages being based upon copolymer weight. The copolymer had a melt index (ASTM Test D-1238) of 1. |
| ECO-2 | An ethylene/carbon monoxide copolymer having polymerized therein 90 percent ethylene and 10 percent carbon monoxide, both percentages being based upon copolymer weight. The copolymer had a melt index (ASTM Test D-1238) of 1. |
| EVA-1 | An ethylene/vinyl acetate copolymer having polymerized therein 60 percent ethylene and 40 percent vinyl acetate, both percentages being based upon copolymer weight. The copolymer had a melt index (ASTM Test D-1238) of 48 to 66 grams per ten minutes and a density (ASTM Test D-1238) of 0.98 grams per cubic centimeter. The copolymer was commercially available from E. I. duPont de Nemours & Company under the trade designation EVA-40. |
| EVA-2 | An ethylene/vinyl acetate copolymer having polymerized therein 72 percent ethylene and 28 percent vinyl acetate, both percentages being based upon copolymer weight. The copolymer had a melt index (ASTM Test D-1238) of 6.0 grams per ten minutes and a density (ASTM Test D-792) of 0.955 grams per cubic centimeter. The copolymer was commercially |

| Code | Polymer Description |
|------|---------------------|

available from E. I. duPont de Nemours & Company under the trade designation Elvax® 260.

EVA-3 — An ethylene/vinyl acetate copolymer having polymerized therein 72 percent ethylene and 28 percent vinyl acetate, both percentages being based upon copolymer weight. The copolymer had a melt index (ASTM Test D-1238) of 25 grams per ten minutes and a density (ASTM Test D-792) of 0.951 grams per cubic centimeter. The copolymer was commercially available from E. I. duPont de Nemours & Company under the trade designation Elvax® 250.

EVA-4 — An ethylene/vinyl acetate copolymer having polymerized therein 82 percent ethylene and 18 percent vinyl acetate, both percentages being based upon copolymer weight. The copolymer had a melt index (ASTM Test D-1238) of 5.5 grams per ten minutes and a density (ASTM Test D-792) of 0.940 grams per cubic centimeter. The copolymer was commercially available from E. I. duPont de Nemours & Company under the trade designation EVA-3294.

EVA-5 — An ethylene/vinyl acetate copolymer having polymerized therein 90.5 percent ethylene and 9.5 percent vinyl acetate, both percentages being based upon copolymer weight. The copolymer had a melt index (ASTM Test D-1238) of 0.8 grams per ten minutes and a density (ASTM Test D-792) of 0.930 grams per cubic centimeter. The copolymer was commercially available from E. I. duPont de Nemours & Company under the trade designation Elvax® 770.

EVA-6 — An ethylene/vinyl acetate copolymer having polymerized therein 85 percent ethylene and 15 percent vinyl acetate, both percentages being based upon copolymer weight. The copolymer had a melt index (ASTM Test D-1238) of 2.5 grams per ten minutes and a density (ASTM Test D-792) of 0.935 grams per cubic centimeter. The copolymer was commercially available from E. I. duPont de Nemours & Company under the trade designation Elvax® 560.

| Code | Polymer Description |
|------|---------------------|
| EVA-7 | An ethylene/vinyl acetate copolymer having polymerized therein 81 percent ethylene and 19 percent vinyl acetate, both percentages being based upon copolymer weight. The copolymer had a melt index (ASTM Test D-1238) of 0.65 grams per ten minutes and a density (ASTM Test D-792) of 0.94 grams per cubic centimeter. |
| HEVA | A hydrolyzed ethylene/vinyl acetate copolymer prepared by hydrolyzing EVA-5. |
| EVA/X | An ethylene/vinyl acetate terpolymer having a melt index (ASTM Test D-1238) of 6 grams per ten minutes and a density (ASTM Test D-792) of 0.955 grams per cubic centimeter. The terpolymer was commercially available from E. I. duPont de Nemours & Company under the trade designation CXA 1104. |
| CPE-1 | A chlorinated polyethylene polymer having a chemically combined chlorine content of 42 percent by weight of polymer, and a nominal melt viscosity of 18,000 poise. Melt viscosity was determined using a capillary rheometer at a temperature of 190°C, a shear rate of 145 reciprocal seconds and a capillary size of .127 by 5.08 centimeters. The polymer was commercially available from The Dow Chemical Company. |
| CPE-2 | A chlorinated polyethylene polymer having a chemically combined chlorine content of 36 percent by weight of polymer, and a nominal melt viscosity of 16,500 poise. Melt viscosity was determined using a capillary rheometer at a temperature of 190°C, a shear rate of 145 reciprocal seconds and a capillary size of .127 by 5.08 centimeters. The polymer was commercially available from The Dow Chemical Company. |
| CLLDPE | A chlorinated linear low density polyethylene polymer having a chemically combined chlorine content of 26.2 percent by weight of polymer and a nominal melt viscosity of 14,080 poise. |

| Code | Polymer Description |
|------|---------------------|
| | Melt viscosity was determined using a capillary rheometer at a temperature of 190°C, a shear rate of 145 reciprocal seconds and a capillary size of .127 by 5.08 centimeters. The linear low density polyethylene polymer had a melt index (ASTM D-1238) of 2.5 grams per ten minutes. The non-chlorinated polymer was commercially available from The Dow Chemical Company under the trade designation Dowlex= 2037. |
| CPP | A chlorinated polypropylene polymer having a chemically combined chlorine content of 7.5 percent by weight of polymer. The polypropylene, prior to chlorination, had a density of 0.902 grams per cubic centimeter (ASTM Test D-792 A-2) and a melt flow rate of 0.4 grams per ten minutes (ASTM Test D-1238). The non-chlorinated polypropylene was commercially available from Hercules, Incorporated under the trade designation Pro-Fax[TM] 6301. |

Various combinations of the polymer components set forth in Table I were prepared as hereinbefore specified. Impact test and permeability test specimens were prepared, also as hereinbefore specified, and subjected to physical property testing.

Results of the physical property tests, where available, are set forth hereinafter together with identity and amount of polymer components of each of the respective combinations. Examples of the present invention are represented by Arabic numerals. Comparative Examples, which are not representative of the present invention, are represented by alphabetic characters.

EP 0 215 150 B1

## TABLE IIA

### BLENDS OF LOW DENSITY POLYETHYLENE AND A VINYLIDENE CHLORIDE INTERPOLYMER

| Example/ Comparative Example | Polymer Code | Component Amount* | Extruder | Impact Energy (Joules) | Oxygen Permeability*** (times $10^{10}$) |
|---|---|---|---|---|---|
| A | VDC-1 | 75 | A | 1.4 | 0.396 |
|   | LDPE | 25 |   |   |   |
| 1 | VDC-1 | 75 | A | 43.4 | 0.0054 |
|   | LDPE | 25 |   |   |   |
|   | EMA-4 | 10** |   |   |   |
| 2 | VDC-1 | 25 | A | 51.5 | 1.76 |
|   | LDPE | 75 |   |   |   |
|   | EMA-4 | 10** |   |   |   |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.

The data presented in Table IIA discloses several points of interest. First, a simple two-component blend (Comparative Example A) has very low impact energy and poor barrier to oxygen. Second, addition of a compatibilizing amount of a third polymer component to the two-component blend, as in Example 1, produces dramatic improvements in both impact energy and barrier to oxygen. Third, by varying the ratio of olefin polymer to vinylidene chloride interpolymer, as in Example 2, barrier to oxygen can be varied without significant effect upon impact energy of the three component blend.

Similar results are obtained with other three-component blends using other vinylidene chloride interpolymer resins and compatibilizing polymer resins, both of which are described hereinabove. Similar results are also obtained with other olefin polymers. Variations in each of the components are shown in Table IIB through IIK which follow.

## TABLE IIB

### BLENDS OF HIGH DENSITY POLYETHYLENE AND A VINYLIDENE CHLORIDE INTERPOLYMER

| Example/ Comparative Example | Polymer Code | Component Amount* | Extruder | Impact Energy (Joules) | Oxygen Permeability*** (times $10^{10}$) |
|---|---|---|---|---|---|
| B | VDC-1 | 65 | B | 1.4 | - |
|   | HDPE | 35 |   |   |   |
| 3 | VDC-1 | 75 | B | 47.5 | 0.006 |
|   | HDPE | 25 |   |   |   |
|   | EMA-4 | 10** |   |   |   |
| 4 | VDC-1 | 25 | B | 67.8 | - |
|   | HDPE | 75 |   |   |   |
|   | EMA-4 | 10** |   |   |   |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.
-Not measured.

The data presented in Table IIB shows that results similar to those presented in Table IIA were obtained when the olefin polymer was high density polyethylene rather than low density polyethylene.

## TABLE IIC

### BLENDS OF OTHER OLEFIN POLYMERS AND A VINYLIDENE CHLORIDE INTERPOLYMER

| Example/<br>Comparative<br>Example | Polymer<br>Code | Component<br>Amount* | Extruder | Impact Energy<br>(Joules) | Oxygen<br>Permeability***<br>(times $10^{10}$) |
|---|---|---|---|---|---|
| 5 | VDC-1 | 67 | B | 21.7 | 0.012 |
|   | PP | 22 | | | |
|   | EMA-4 | 11 | | | |
| 6 | VDC-1 | 64 | B | 20.3 | - |
|   | PB | 26 | | | |
|   | EMA-4 | 10 | | | |
| 7 | VDC-1 | 67 | B | 94.9 | 0.006 |
|   | LLDPE | 27 | | | |
|   | EMA-4 | 6 | | | |
| 8 | VDC-1 | 30 | B | 38.0 | - |
|   | LLDPE | 70 | | | |
|   | EMA-4 | 10** | | | |
| 9 | VDC-1 | 67 | B | 51.5 | 0.006 |
|   | EP | 27 | | | |
|   | EMA-4 | 6 | | | |
| 10 | VDC-1 | 30 | B | 128.8 | 1.14 |
|   | EP | 70 | | | |
|   | EMA-4 | 10** | | | |

*Amounts are in percentages based upon weight of blend unless indicated by **.
**Amounts are based upon parts per hundred parts of other polymer components.
***Cubic centimeters of oxygen times centimeters of thickness divided by the product
of (a) area in square centimeters, (b) one second and (c) barometric pressure in
(centimeters of mercury) 13.33 mbar.
-Not measured.

EP 0 215 150 B1

EP 0 215 150 B1

TABLE IIC  Continued

| Example/ Comparative Example | Polymer Code | Component Amount* | Extruder | Impact Energy (Joules) | Oxygen Permeability*** (times $10^{10}$) |
|---|---|---|---|---|---|
| C | VDC-1 | 65 | B | 1.4 | - |
|  | EPDM | 35 |  |  |  |
| 11 | VDC-1 | 90 | B | 54.2 | - |
|  | EPDM | 10 |  |  |  |
|  | EMA-4 | 10** |  |  |  |

*Amounts are in percentages based upon weight of blend unless indicated by **.
**Amounts are based upon parts per hundred parts of other polymer components.
***Cubic centimeters of oxygen times centimeters of thickness divided by the product
of (a) area in square centimeters, (b) one second and (c) barometric pressure in
(centimeters of mercury) 13.33 mbar.
-Not measured.

The data presented in Table IIC shows that results similar to those presented in Table IIA were obtained with a variety of olefin polymers, all of which are described hereinabove.

## TABLE IID

**BLENDS OF LOW DENSITY POLYETHYLENE, A VINYLIDENE CHLORIDE INTERPOLYMER AND AN ACRYLATE OR METHACRYLATE COPOLYMER**

| Example/ Comparative Example | Polymer Code | Component Amount* | Extruder | Impact Energy (Joules) | Oxygen Permeability*** (times $10^{10}$) |
|---|---|---|---|---|---|
| 12 | VDC-1 | 75 | A | 32.5 | 0.0054 |
|  | LDPE | 25 |  |  |  |
|  | EMMA | 10** |  |  |  |
| 13 | VDC-1 | 75 | A | 21.7 | - |
|  | LDPE | 25 |  |  |  |
|  | EMA-1 | 10** |  |  |  |
| 14 | VDC-1 | 75 | A | 33.9 | 0.006 |
|  | LDPE | 25 |  |  |  |
|  | EMA-2 | 10** |  |  |  |
| 15 | VDC-1 | 75 | A | 40.7 | 0.0054 |
|  | LDPE | 25 |  |  |  |
|  | EMA-3 | 10** |  |  |  |
| 16 | VDC-1 | 75 | A | 29.8 | 0.0066 |
|  | LDPE | 25 |  |  |  |
|  | EMA-4 | 10** |  |  |  |
| 17 | VDC-1 | 75 | A | 35.3 | 0.0048 |
|  | LDPE | 25 |  |  |  |
|  | EMA-5 | 10** |  |  |  |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.
-Not measured.

### TABLE IID   Continued

| Example/ Comparative Example | Polymer Code | Component Amount* | Extruder | Impact Energy (Joules) | Oxygen Permeability*** (times $10^{10}$) |
|---|---|---|---|---|---|
| 18 | VDC-1 | 75 | A | 25.8 | 0.0078 |
|  | LDPE | 25 |  |  |  |
|  | EEA-1 | 10** |  |  |  |
| 19 | VDC-1 | 75 | A | 58.3 | - |
|  | LDPE · | 25 |  |  |  |
|  | EEA-2 | 10** |  |  |  |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.
-Not measured.

The data presented in Table IID shows that a variety of compatibilizing polymers were suitable for use in preparing the compatibilized blends of the present invention.

## TABLE IIE

BLENDS OF LOW DENSITY POLYETHYLENE, A VINYLIDENE CHLORIDE
INTERPOLYMER AND AN ETHYL OXAZOLINE MODIFIED COPOLYMER OF ETHYLENE AND ACRYLIC ACID

| Example/ Comparative Example | Polymer Code | Component Amount* | Extruder | Percent Acrylic Acid**** | Impact Energy (Joules) | Oxygen Permeability*** (times $10^{10}$) |
|---|---|---|---|---|---|---|
| D | VDC-1 | 75 | A | - | 4.1 | - |
| | LDPE | 25 | | | | |
| | m/EAA-1 | 10** | | 3 | | |
| 20 | VDC-1 | 75 | A | - | 16.3 | 0.0042 |
| | LDPE | 25 | | | | |
| | m/EAA-2 | 10** | | 6.5 | | |
| 21 | VDC-1 | 75 | A | - | 21.7 | - |
| | LDPE | 25 | | | | |
| | m/EAA-3 | 10** | | 9 | | |
| E | VDC-1 | 50 | A | - | 1.4 | - |
| | LDPE | 50 | | | | |
| | m/EAA-4 | 10** | | 20 | | |

*Amounts are in percentages based upon weight of blend unless indicated by **.
**Amounts are based upon parts per hundred parts of other polymer components.
***Cubic centimeters of oxygen times centimeters of thickness divided by the product
of (a) area in square centimeters, (b) one second and (c) barometric pressure in
(centimeters of mercury) 13.33 mbar.
****Based upon weight of ethylene/acrylic acid copolymer.
-Not measured.

The data presented in Table IIE shows that another group of compatibilizing polymers, the ethyloxazoline-modified ethylene/acrylic acid polymers, also produced satisfactory results provided two conditions are met. First the polymer, prior to modification must have a polymerized acrylic acid content which is greater than 3 percent but less than 20 percent by weight of polymer. Second a ratio of vinylidene chloride polymer to low density polyethylene of greater than 1:1 is necessary.

EP 0 215 150 B1

## TABLE IIF

### BLEND OF LOW DENSITY POLYETHYLENE, A VINYLIDENE
### CHLORIDE INTERPOLYMER AND AN ETHYLENE/ACRYLIC ACID COPOLYMER

| Example/ Comparative Example | Polymer Code | Component Amount* | Extruder | Percent Acrylic Acid**** | Impact Energy (Joules) | Oxygen Permeability*** (times $10^{10}$) |
|---|---|---|---|---|---|---|
| F | VDC-1 | 75 | A | - | 2.7 | - |
|  | LDPE | 25 |  |  |  |  |
|  | EAA-1 | 10** |  | 6.5 |  |  |
| G | VDC-1 | 75 | A | - | 1.4 | - |
|  | LDPE | 25 |  |  |  |  |
|  | EAA-2 | 10** |  | 9 |  |  |

*Amounts are in percentages based upon weight of blend unless indicated by **.
**Amounts are based upon parts per hundred parts of other polymer components.
***Cubic centimeters of oxygen times centimeters of thickness divided by the product
 of (a) area in square centimeters, (b) one second and (c) barometric pressure in
 (centimeters of mercury) 13.33 mbar.
****Based upon weight of ethylene/acrylic acid copolymer.
 -Not measured.

The data presented in Table IIF amply demonstrates that unmodified ethylene/acrylic acid copolymers were not effective compatibilizers (Comparative Examples F and G). By way of contrast, some of the same copolymers, when modified by ethyloxazoline, were effective compatiblizers (Examples 20 and 21, Table IIE).

EP 0 215 150 B1

## TABLE II-G

### BLENDS OF LOW DENSITY POLYETHYLENE, A VINYLIDENE
### CHLORIDE INTERPOLYMER AND AN ETHYLENE/CARBON MONOXIDE COPOLYMER

| Example/ Comparative Example | Polymer Code | Component Amount* | Extruder | Impact Energy (Joules) | Oxygen Permeability*** (times $10^{10}$) |
|---|---|---|---|---|---|
| H | VDC-1 | 75 | A | 2.7 | - |
|  | LDPE | 25 |  |  |  |
|  | ECO-1 | 10** |  |  |  |
| 22 | VDC-1 | 75 | A | 13.6 | - |
|  | LDPE | 25 |  |  |  |
|  | ECO-2 | 10** |  |  |  |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.
-Not measured.

The data presented in II-G demonstrates that ethylene/carbon monoxide copolymers are effective compatibilizers provided the copolymer has polymerized therein a sufficient amount of carbon monoxide. It is clear that a carbon monoxide content of one percent is inadequate and that a carbon monoxide content of ten percent provides satisfactory results. Similar results are obtained with other ethylene/carbon monoxide copolymers having a sufficient polymerized carbon monoxide content.

EP 0 215 150 B1

## TABLE II-H

### BLENDS OF LOW DENSITY POLYETHYLENE, A VINYLIDENE
### CHLORIDE INTERPOLYMER AND AN ETHYLENE/VINYL ACETATE COPOLYMER

| Example/ Comparative Example | Polymer Code | Component Amount* | Extruder | Impact Energy (Joules) | Oxygen Permeability*** (times $10^{10}$) |
|---|---|---|---|---|---|
| I | VDC-1 | 75 | A | 1.4 | - |
|   | LDPE | 25 |   |   |   |
|   | EVA-1 | 10** |   |   |   |
| J | VDC-1 | 75 | A | 1.4 | - |
|   | LDPE | 25 |   |   |   |
|   | EVA-2 | 10** |   |   |   |
| 23 | VDC-1 | 50 | A | 25.8 | - |
|   | LDPE | 50 |   |   |   |
|   | EVA-3 | 10** |   |   |   |
| 24 | VDC-1 | 50 | A | 23.0 | - |
|   | LDPE | 50 |   |   |   |
|   | EVA-4 | 10** |   |   |   |
| 25 | VDC-1 | 75 | A | 10.8 | 0.0066 |
|   | LDPE | 25 |   |   |   |
|   | EVA-4 | 10** |   |   |   |
| K | VDC-1 | 75 | A | 1.4 | - |
|   | LDPE | 25 |   |   |   |
|   | EVA-5 | 10** |   |   |   |

*Amounts are in percentages based upon weight of blend unless indicated by **.
**Amounts are based upon parts per hundred parts of other polymer components.
***Cubic centimeters of oxygen times centimeters of thickness divided by the product of (a) area in square centimeters, (b) one second and (c) barometric pressure in (centimeters of mercury) 13.33 mbar.
-Not measured.

EP 0 215 150 B1

TABLE II-H   Continued

| Example/ Comparative Example | Polymer Code | Component Amount* | Extruder | Impact Energy (Joules) | Oxygen Permeability*** (times $10^{10}$) |
|---|---|---|---|---|---|
| L | VDC-1 | 75 | A | 1.4 | - |
| | LDPE | 25 | | | |
| | EVA-6 | 10** | | | |
| 26 | VDC-1 | 75 | A | 32.6 | - |
| | LDPE | 25 | | | |
| | EVA-7 | 10** | | | |

*Amounts are in percentages based upon weight of blend unless indicated by **.
 **Amounts are based upon parts per hundred parts of other polymer components.
***Cubic centimeters of oxygen times centimeters of thickness divided by the product
   of (a) area in square centimeters, (b) one second and (c) barometric pressure in
   (centimeters of mercury) 13.33 mbar.
   -Not measured.

The data presented in Table II-H shows that several interrelated factors must be considered in selecting an ethylene/vinyl acetate copolymer as a compatibilizing polymer. One factor is ratio of vinylidene chloride interpolymer to olefin polymer. A second factor is melt index of the ethylene/vinyl acetate polymer in comparison with that of the olefin polymer. A third factor is the polymerized vinyl acetate content of the ethylene/vinyl acetate polymer.

A comparison of Example 24 with Example 25 indicates that as the ratio of vinylidene chloride interpolymer to olefin polymer decreases, impact energy of the compatibilized blend increases. In Example 24, the ratio is 1:1 and the impact energy is 23.0 Joules whereas in Example 25, the ratio is 3:1 and the impact energy is 10.8 Joules.

A comparison of Comparative Example L with Example 26 indicates that impact energy measurements are higher when the melt index of the ethylene/vinyl acetate polymer is lower than that of the olefin polymer than when it is higher. In Comparative Example L, the melt index was 2.5 grams per 10 minutes. In Example 26, the melt index was 0.65 grams per 10 minutes. That of the olefin polymer was 2.0 grams per 10 minutes.

A comparison of Example 25 with Comparative Example K, indicates that impact energy measurements increase with increasing polymerized vinyl acetate content in the ethylene/vinyl acetate polymer. In Example 25, the ethylene vinyl acetate copolymer had a polymerized vinyl acetate content of 18 percent by weight of polymer. In Comparative Example K, the ethylene vinyl acetate copolymer had a polymerized vinyl acetate content of 9.5 percent by weight of polymer.

## TABLE II-I

BLENDS OF HIGH DENSITY POLYETHYLENE, A VINYLIDENE CHLORIDE INTERPOLYMER AND AN
ETHYLENE/VINYL ACETATE CONTAINING TERPOLYMER OR A MODIFIED
ETHYLENE/VINYL ACETATE COPOLYMER

| Example/ Comparative Example | Polymer Code | Component Amount* | Extruder | Impact Energy (Joules) | Oxygen Permeability*** (times $10^{10}$) |
|---|---|---|---|---|---|
| 27 | VDC-1 | 67 | B | 65.1 | - |
| | HDPE | 22 | | | |
| | HEVA | 11 | | | |
| 28 | VDC-1 | 75 | B | 16.3 | - |
| | HDPE | 25 | | | |
| | EVA/X | 10** | | | |

*Amounts are in percentages based upon weight of blend unless indicated by **.
**Amounts are based upon parts per hundred parts of other polymer components.
***Cubic centimeters of oxygen times centimeters of thickness divided by the product
of (a) area in square centimeters, (b) one second and (c) barometric pressure in
(centimeters of mercury) mbar.
-Not measured.

The data presented in Table II-I shows that a hydrolyzed ethylene/vinyl acetate copolymer (Example 27) and an ethylene/vinyl acetate terpolymer (Example 28) were also effective as compatibilizers.

## TABLE II-J

BLENDS OF AN OLEFIN POLYMER, A VINYLIDENE CHLORIDE
INTERPOLYMER AND A CHLORINATED COMPATIBILIZING POLYMER

| Example/ Comparative Example | Polymer Code | Component Amount* | Extruder | Impact Energy (Joules) | Oxygen Permeability*** (times $10^{10}$) |
|---|---|---|---|---|---|
| 29 | VDC-1 | 75 | B | 25.8 | 0.006 |
|  | HDPE | 25 |  |  |  |
|  | CPE-1 | 10** |  |  |  |
| 30 | VDC-1 | 75 | B | 8.1 | - |
|  | HDPE | 25 |  |  |  |
|  | CPE-2 | 10** |  |  |  |
| 31 | VDC-1 | 75 | B | 146.4 | 0.0078 |
|  | LLDPE | 25 |  |  |  |
|  | CLLDPE | 10** |  |  |  |
| 32 | VDC-1 | 67 | B | 13.5 | - |
|  | PP | 22 |  |  |  |
|  | CPP | 11 |  |  |  |

*Amounts are in percentages based upon weight of blend unless indicated by **.
**Amounts are based upon parts per hundred parts of other polymer components.
***Cubic centimeters of oxygen times centimeters of thickness divided by the product
  of (a) area in square centimeters, (b) one second and (c) barometric pressure in
  (centimeters of mercury) mbar.
-Not measured.

The data presented in Table II-J demonstrates that a variety of halogenated olefin polymers were also effective as compatibilizers.

TABLE II-K

THREE-COMPONENT BLENDS CONTAINING
DIFFERENT VINYLIDENE CHLORIDE COPOLYMERS

| Example/ Comparative Example | Polymer Code | Component Amount* | Extruder | Impact Energy (Joules) | Oxygen Permeability*** (times $10^{10}$) |
|---|---|---|---|---|---|
| 1 | VDC-1 | 75 | A | 43.4 | 0.0054 |
|  | LDPE | 25 |  |  |  |
|  | EMA-4 | 10** |  |  |  |
| 33 | VDC-2 | 75 | A | 47.5 | 0.0051 |
|  | LDPE | 25 |  |  |  |
|  | EMA-4 | 10** |  |  |  |
| 34 | VDC-3 | 75 | A | 8.1 | 0.0055 |
|  | LDPE | 25 |  |  |  |
|  | EMA-4 | 10** |  |  |  |
| M | VDC-4 | 75 | A | 1.4 | 0.0028 |
|  | LDPE | 25 |  |  |  |
|  | EMA-4 | 10** |  |  |  |
| 35 | VDC-5 | 75 | A | 27.1 | 0.0096 |
|  | LDPE | 25 |  |  |  |
|  | EMA-4 | 10** |  |  |  |
| 36 | VDC-6 | 75 | A | 9.5 | 0.0066 |
|  | LDPE | 25 |  |  |  |
|  | EMA-4 | 10** |  |  |  |

*Amounts are in percentages based upon weight of blend unless indicated by **.
**Amounts are based upon parts per hundred parts of other polymer components.
***Cubic centimeters of oxygen times centimeters of thickness divided by the product
of (a) area in square centimeters, (b) one second and (c) barometric pressure in
(centimeters of mercury) mbar.

The data presented in Table II-K shows that a variety of vinylidene chloride copolymers produced compatible blends of the present invention. The three-component blend of Comparative Example M produced unsatisfactory results. It is believed that the blend of Comparative Example M was unsatisfactory because the melt viscosity of the vinylidene chloride copolymer was too low in comparison to that of the ethylene/methyl acrylate copolymer and the low density polyethylene. As noted hereinabove, achieving a visually homogeneous melt becomes more difficult as disparity of melt viscosity increases.

A review of the physical property data set forth in Table IIA–IIJ brings out several points.

First, a binary blend of an olefin polymer and a vinylidene chloride interpolymer has low impact energy and high permeability to oxygen (Comparative Examples A, B and C). A ternary blend of an olefin polymer, a vinylidene chloride interpolymer and a compatibilizing amount of at least one other polymer selected from the polymers hereinbefore identified has much higher impact energy (Examples 1 and 2). In addition, the ternary blend has, depending upon relative proportions of olefin polymer and vinylidene chloride interpolymer either low permeability to oxygen (Example 1) or high permeability to oxygen (Example 2).

Second, a variety of olefin polymers may be used in conjunction with a vinylidene chloride interpolymer and a compatibilizing amount of at least one other polymer. See, Examples 3, 5–7, 9, 11.

Third, a variety of polymers are suitable for use as compatibilizing polymers. See, Examples 1, and 12–32.

Similar results are obtained with other compatibilized blends prepared as hereinbefore specified using polymer components, also as hereinbefore specified.

## Claims

1. A compatibilized blend of polymers comprising (a) a vinylidene chloride interpolymer and (b) an olefin polymer in the weight ratio of (a) to (b) from 9:1 to 1:9 and a compatibilizing amount of from 2 to 35 parts per weight per hundred parts of (a) plus (b) of a compatibilizing polymer, wherein the interpolymer (a) having polymerized therein vinylidene chloride in an amount from 40 to 98 percent by weight of interpolymer and at least one monoethylenically unsaturated monomer copolymerizable therewith in an amount from 60 to 2 percent by weight of interpolymer, said compatibilizing polymer (c) being selected from the group consisting of (i) ethylene interpolymers having polymerized therein from 97 to 60 weight percent of ethylene and from 3 to 40 weight percent of at least one oxygen containing species copolymerizable therewith; and (ii) olefin polymers having halogen chemically affixed thereto in an amount of from 24 to 44 percent by weight of polymer; with the further proviso that if the compatibilizing polymer (c) is an ethyloxazoline-modified ethylene/acrylic acid polymer, then said polymer prior to modification has a polymerized acrylic acid content which is greater than 3 percent by weight but less than 20 percent by weight of unmodified polymer and the ratio of vinylidene chloride polymer to low density polyethylene is greater than 1:1.

2. The compatibilized blend of Claim 1 wherein the olefin polymers of (b) are selected from the group consisting of (1) low density polyethylene; (2) medium density polyethylene, (3) high density polyethylene, (4) polypropylene, (5) poly 1-butene, (6) generally linear interpolymers of ethylene having polymerized therein from 2 to 98 weight percent of ethylene and from 98 to 2 weight percent of at least one 1-alkene, said alkene having from 3 to 18 carbon atoms, (7) interpolymers of two or more alpha-olefins having from 3 to 18 carbon atoms per molecule, and (8) rubbery ethylene-propylenediene monomer interpolymers, and mixtures thereof.

3. The compatibilized blend of Claim 1 having a ratio of (a) to (b) of from 9:1 to 3:1.

4. The compatibilized blend of Claim 1 wherein the monomer copolymerizable with vinylidene chloride is selected from the group consisting of vinyl chloride, alkyl acrylates, alkyl methacrylates, acrylic acid, methacrylic acid, itaconic acid, acrylonitrile and methacrylonitrile.

5. The compatibilized blend of Claim 1 wherein the vinylidene chloride interpolymer has polymerized therein vinylidene chloride in an amount of from 89 to 95 percent by weight of interpolymer and methyl acrylate in an amount of from 11 to 5 percent by weight of interpolymer.

6. The compatibilized blend of Claim 2 wherein the olefin polymer of (b) is low density polyethylene, the low density polyethylene having a density of from 0.917 to 0.929 grams per cubic centimeter and a melt index, measured in accordance with American Society for Testing and Materials Test D-1238, of from 0.1 to 20 grams per 10 minutes.

7. The compatibilized blend of Claim 2 wherein the olefin polymer of (b) is medium density polyethylene, the medium density polyethylene having a density of from 0.930 to 0.939 grams per cubic centimeter and a melt index, measured in accordance with American Society for Testing and Materials Test D-1238, of from 0.08 to 100 grams per 10 minutes.

8. The compatibilized blend of Claim 2 wherein the olefin polymer of (b) is high density polyethylene, the high density polyethylene having a density of from 0.940 to 0.965 grams per cubic centimeter and a melt index, measured in accordance with American Society for Testing and Materials Test D-1238, of from 0.08 to 100 grams per 10 minutes.

9. The compatibilized blend of Claim 2 wherein the olefin polymer of (b) is a linear copolymer of ethylene and at least one 1-alkene, the copolymer having polymerized therein ethylene in an amount of from 80

EP 0 215 150 B1

to 98 percent by weight of copolymer and one or more 1-alkenes in a total amount of from 20 to 2 percent by weight of copolymer.

10. The compatibilized blend of Claim 2 wherein the olefin polymer of (b) is a copolymer of ethylene and at least one monomer copolymerizable therewith, the monomer being selected from the group consisting of alpha-olefin monomers having from 3 to 18 carbon atoms per molecule.

11. The compatibilized blend of Claim 1 wherein the compatibilizing polymer is selected from the group consisting of (a) ethylene interpolymers having polymerized therein from 97 to 60 weight percent of ethylene and from 3 to 40 weight percent of at least one ethylenically unsaturated carboxylic acid monomer copolymerizable therewith, the interpolymer being esterified after preparation thereof; (b) copolymers of ethylene and at least one alkyl acrylate, the alkyl acrylate having from 1 to 8 carbon atoms per alkyl group; (c) copolymers of ethylene and at least one alkyl methacrylate, the alkyl methacrylate having from 1 to 8 carbon atoms per alkyl group; (d) copolymers of ethylene and carbon monoxide; (e) interpolymers of ethylene, carbon monoxide and (1) an ester of an ethylenically unsaturated carboxylic acid or (2) vinyl acetate; (f) copolymers of ethylene and vinyl acetate; and (g) ethyl oxazoline modified copolymers of ethylene and acrylic acid.

12. The compatibilized blend of Claim 1 wherein the compatibilizing polymer is selected from the group consisting of (a) copolymers of ethylene and at least one alkyl acrylate, the alkyl acrylate having from 1 to 4 carbon atoms per alkyl group; (b) copolymers of ethylene and at least one alkyl methacrylate, the alkyl methacrylate having from 1 to 4 carbon atoms per alkyl groups; and (c) 2-ethyl-2-oxazoline modified copolymers of ethylene and acrylic acid.

13. The compatibilized blend of Claim 1 wherein the compatibilizing polymer is a copolymer of ethylene and methyl acrylate, the copolymer having polymerized therein ethylene in an amount of from 95 to 80 percent by weight of copolymer and methyl acrylate in an amount of from 5 to 20 percent by weight of copolymer.

14. The compatibilized blend of Claim 1 wherein said compatible blend has an impact energy which is greater than the impact energy of a blend of the vinylidene chloride interpolymer and the olefin polymer.

15. A compatibilized blend of Claim 1 wherein said olefin polymer of (b) is a copolymer of ethylene and at least one alpha-olefin.

16. A compatibilized blend of polymers according to Claim 1 having an oxygen permeability rate less than 1.76 measured as cubic centimeters of oxygen times centimeters of sample thickness divided by the product of (a) area in square centimeters (b) one second and (c) barometric pressure in 13.33 mbar (mercury centimeters).

17. A process for the preparation of a compatibilized blend of polymers comprising (a) a vinylidene chloride interpolymer and an olefin polymer in the weight ratio of (a) to (b) from 9:1 to 1:9 and a compatibilizing amount of from 2 to 35 parts per weight per hundred parts of (a) plus (b) of a compatibilizing polymer (c), wherein the interpolymer (a) having polymerized therein vinylidene chloride in an amount from 40 to 98 percent by weight of interpolymer and at least one monoethylenically unsaturated monomer copolymerizable therewith in an amount from 60 to 2 percent by weight of interpolymer, said compatibilizing polymer (c) being selected from the group consisting of (i) ethylene interpolymers having polymerized therein from 97 to 60 weight percent of ethylene and from 3 to 40 weight percent of at least one oxygen containing species copolymerizable therewith; and (ii) olefin polymers having halogen chemically affixed thereto in an amount of from 24 to 44 percent by weight of polymer; with the further proviso that if the compatibilizing polymer (c) is an ethyloxazoline-modified ethylene/acrylic acid polymer, then said polymer prior to modification has a polymerized acrylic acid content which is greater than 3 percent by weight but less than 20 percent by weight of unmodified polymer and the ratio of vinylidene chloride polymer to low density polyethylene is greater than 1:1, characterized in that the admixture of said three polymeric components (a), (b) and (c) is melt blended at the temperature below that at which decomposition of the vinylidene chloride interpolymer becomes significant and under shear sufficient to provide a visually homogeneous blend within reasonable mixing time.

18. A process for the preparation of a compatibilized blend of polymers according to Claim 17, characterized in that the melt blending of the admixture of said three polymeric components is accomplished in two stages.

19. A process of Claim 17, characterized in that the melt blending is accomplished in an extruder.

20. A process of Claim 19, characterized in that the three zones of the extruder are kept at the following temperatures: (a) hopper zone at a temperature from 160–165°C; (b) melt zone at a temperature from 165–170°C, and (c) die zone at a temperature from 170–175°C.

**Patentansprüche**

1. Verträglich gemachte Polymermischung enthaltend (a) ein Vinylidenchloridmischpolymer und (b) ein Olefinpolymer im Gewichtsverhältnis von (a):(b) von 9:1 bis 1:9 und eine verträglich machende Menge von 2-35 Gewichtsteilen pro hundert Gewichtsteile von (a) plus (b) eines verträglich machenden Polymeren, wobei das Mischpolymer (a) einpolymerisiert enthält Vinylidenchlorid in einer Menge von 40-98 Gewichtsprozent des Mischpolymeren und mindestens damit copolymerisierbaren, einfach ethylenisch ungesättigten Monomeren in einer Menge von 60-2 Gewichtsprozent des Mischpolymeren, wobei das verträglich machende Polymer (c) ausgewählt ist aus der Gruppe bestehend aus (i) Ethylenmischpolymeren, die einpolymerisiert enthalten von 97-60 Gewichtsprozent Ethylen und von 3-40 Gewichtsprozent mindestens eines damit copolymerisierbaren, Sauerstoff enthaltenden Spezis, und (ii) Olefinpolymeren, die chemisch gebundenes Halogen in einer Menge von 24-44 Gewichtsprozent des Polymeren aufweisen, mit der zusätzlichen Bedingung, wenn das verträglich machende Polymer (c) ein Ethyloxazolin-modifiziertes Ethylenacrylsäurepolymer ist, weist das Polymer vor der Modifikation einen einpolymerisierten Acrylsäuregehalt von mehr als 3 Gewichtsprozent, jedoch weniger als 20 Gewichtsprozent des nicht modifizierten Polymers auf, und das Verhältnis von Vinylidenchloridpolymer:Polyethylen in niedriger Dichte größer als 1:1 ist.

2. Verträglich gemachte Mischung nach Anspruch 1, dadurch gekennzeichnet, daß die Olefinpolymeren von (b) aus der Gruppe ausgewählt sind bestehend aus (1) Polyethylen niedriger Dichte, (2) Polyethylen mittlerer Dichte, (3) Polyethylen hoher Dichte, (4) Polypropylen. (5) Poly-1-buten, (6) im allgemeinen linearen Mischpolymeren von Ethylen, die von 98-2 Gewichtsprozent mindestens eines 1-Alken einpolymerisiert enthalten, wobei das Alken von 3-18 Kohlenstoffatome aufweist, (7) Mischpolymeren von zwei oder mehr alpha-Olefinen mit 3-18 Kohlenstoffatomen pro Molekül, und (8) Kautschukmischpolymeren aus Ethylen-propylendienmonomer und Mischungen derselben.

3. Verträglich gemachte Mischung nach Anspruch 1, dadurch gekennzeichnet, daß sie ein Verhältnis von (a):(b) von 9:1 bis 3:1 aufweist.

4. Verträglich gemachte Mischung nach Anspruch 1, dadurch gekennzeichnet, daß das mit Vinylidenchlorid copolymerisierbare Monomer ausgewählt ist aus der aus Vinylchlorid, Alkylacrylat, Alkylmethacrylat, Acrylsäure, Methacrylsäure, Itaconsäure, Acrylnitril und Methacrylnitril bestehenden Gruppe.

5. Verträglich gemachte Mischung nach Anspruch 1, dadurch gekennzeichnet, daß das Vinylidenchloridmischpolymere einpolymerisiert enthält eine Menge von 89-95 Gewichtsprozent des Mischpolymeren an Vinylidenchlorid und eine Menge von 11-5 Gewichtsprozent des Mischpolymeren von Methylacrylat.

6. Verträglich gemachte Mischung nach Anspruch 2, dadurch gekennzeichnet, daß das Olefinpolymer von (b) ein Polyethylen niedriger Dichte ist, das Polyethylen niedriger Dichte eine Dichte von 0,917-0,929 g/cm$^3$ und einen Schmelzindex, gemessen nach ASTM Test D-1238. von 0,1-20 g/10 Minuten aufweist.

7. Verträglich gemachte Mischung nach Anspruch 2, dadurch gekennzeichnet, daß das Olefinpolymer von (b) ein Polyethylen mittlerer Dichte ist, das Polyethylen mittlerer Dichte eine Dichte von 0,930-0, 939 g/cm$^3$ und einen Schmelzindex, gemessen nach ASTM Test D-1238, von 0,08-100 g/10 Minuten aufweist.

8. Verträglich gemachte Mischung nach Anspruch 2, dadurch gekennzeichnet, daß das Olefinpolymer von (b) ein Polyethylen hoher Dichte ist, das Polyethylen hoher Dichte eine Dichte von 0,940-0,965 g/cm$^3$ und einen Schmelzindex, gemessen nach ASTM Test D-1238, von 0,08-100 g/10 Minuten aufweist.

9. Verträglich gemachte Mischung nach Anspruch 2, dadurch gekennzeichnet, daß das Olefinpolymer von (b) ein lineares Copolymer von Ethylen und mindestens einem 1-Alken ist, wobei das Copolymer einpolymerisiert enthält Ethylen in einer Menge von 80-98 Gewichtsprozent des Copolymeren und ein oder mehr 1-Alkene in einer Gesamtmenge von 20-2 Gewichtsprozent des Copolymeren.

10. Verträglich gemachte Mischung nach Anspruch 2, dadurch gekennzeichnet, daß das Olefinpolymer von (b) ein Copolymer von Ethylen und mindestens einem damit copolymerisierbaren Monomer ist, wobei das Monomer ausgewählt ist aus der Gruppe bestehend aus alpha-Olefinmonomeren mit 3-18 Kohlenstoffatomen pro Molekül.

11. Verträglich gemachte Mischung nach Anspruch 1, dadurch gekennzeichnet daß das verträglich machende Polymer ausgewählt ist aus der Gruppe bestehend aus (a) Ethylenmischpolymeren, die einpolymerisiert enthalten von 97-60 Gewichtsprozent Ethylen und von 3-40 Gewichtsprozent mindestens eines damit copolymerisierbaren, ethylenisch ungesättigten Carbonsäuremonomeren, das Mischpolymere nach der Herstellung desselben verestert ist, (b) Copolymeren von Ethylen und mindestens einem Alkylacrylat, wobei das Alkylacrylat von 1-8 Kohlenstoffatome pro Alkylgruppe aufweist, (c) Copolymeren von Ethylen und mindestens einem Alkylmethacrylat, wobei das Alkylmethacrylat von 1-8 Kohlenstoffatome pro Alkylgruppe aufweist, (d) Copolymeren von Ethylen und Kohlenmonoxid, (e) Mischpolymeren von Ethylen, Kohlenmonoxid und (1) einem Ester einer ethylenisch ungesättigten Carbonsäure oder (2) Vinylacetat, (f) Copolymeren von Ethylen und Vinylacetat und (g) Ethyloxazolin modifizierten Copolymeren von Ethylen und Acrylsäure.

12. Verträglich gemachte Mischung nach Anspruch 1, dadurch gekennzeichnet, daß das verträglich machende Polymer ausgewählt ist aus der Gruppe bestehend aus (a) Copolymeren von Ethylen und mindestens einem Alkylacrylat, wobei das Alkylacrylat von 1-4 Kohlenstoffatome pro Alkylgruppe aufweist, (b) Copolymeren von Ethylen und mindestens einem Alkylmethacrylat, wobei das Alkylmethacrylat von 1-4 Kohlenstoffatome pro Alkylgruppe aufweist, und (c) 2-Ethyl-2-oxazolinmodifizierten Copolymeren von Ethylen und Acrylsäure.

13. Verträglich gemachte Mischung nach Anspruch 1, dadurch gekennzeichnet, daß das verträglich machende Polymer ein Copolymer aus Ethylen und Methylacrylat ist, wobei das Copolymere einpolymerisiert Ethylen in einer Menge von 95-80 Gewichtsprozent Copolymeren und Methylacrylat in einer Menge von 5-20 Gewichtsprozent des Copolymeren enthält.

14. Verträglich gemachte Mischung nach Anspruch 1, dadurch gekennzeichnet, daß die verträgliche Mischung eine Schlagarbeit aufweist, die größer ist als die Schlagarbeit einer Mischung von Vinylidenchloridmischpolymer und Olefinpolymer.

15. Verträglich gemachte Mischung nach Anspruch 1, dadurch gekennzeichnet, daß das Olefinpolymer von (b) ein Copolymer von Ethylen und mindestens einem alpha-Olefin ist.

16. Verträglich gemachte Mischung von Polymeren nach Anspruch 1, dadurch gekennzeichnet, daß sie eine Sauerstoffdurchlässigkeitsgeschwindigkeit von weniger als 1,76, gemessen als Kubikcentimeter Sauerstoff mal Centimeter Probendicke, dividiert durch das Produkt aus (a) Fläche in Quadratcentimeter, (b) eine Sekunde und (c) barometrischen Druck in 13, 33 mbar (Centimeter Quecksilber) aufweist.

17. Verfahren zur Herstellung einer verträglich gemachten Mischung von Polymeren enthaltend (a) ein Vinylidenchloridmischpolymer und ein Olefinpolymer in dem Gewichtsverhältnis von (a):(b) von 9:1 bis 1:9 und einer verträglich machenden Menge von 2-35 Gewichtsteilen pro hundert Gewichtsteile von (a) plus (b) eines verträglich machenden Polymeren (c), wobei das Mischpolymer von (a) einpolymerisiert enthält Vinylidenchlorid in einer Menge von 40-98 Gewichtsprozent des Mischpolymeren und mindestens einen damit copolymerisierbaren, einfach ethylenisch ungesättigtem Monomeren in einer Menge von 60-2 Gewichtsprozent des Mischpolymeren, wobei das verträglich machende Polymer (c) ausgewählt ist aus der Gruppe bestehend aus (i) Ethylenmischpolymeren, die einpolymerisiert enthalten von 97-60 Gewichtsprozent Ethylen und von 3-40 Gewichtsprozent mindestens eines damit copolymerisierbaren, Sauerstoff enthaltenden Spezis, und (ii) Olefinpolymeren, die chemisch gebundenes Halogen in einer Menge von 24-44 Gewichtsprozent des Polymeren aufweisen, mit der zusätzlichen Bedingung, wenn das verträglich machende Polymer (c) ein Ethyloxazolinmodifiziertes Ethylen/Acrylsäurepolymer ist, weist das Polymer vor der Modifikation einen einpolymerisierten Acrylsäuregehalt von mehr als 3 Gewichtsprozent, jedoch weniger als 20 Gewichtsprozent des nicht modifizierten Polymers auf, und das Verhältnis von Vinylidenchloridpolymer:Polyethylen niedriger Dichte größer als 1:1 ist, dadurch gekennzeichnet, daß die Mischung der drei polymeren Bestandteile (a), (b) und (c) in der Schmelze gemischt wird bei der Temperatur, unterhalb der eine wesentliche Zersetzung des Vinylidenchloridmischpolymeren auftritt, und mit einer ausreichenden Scherung, um eine sichtbar homogene Mischung innerhalb angemessener Mischzeit zu erhalten.

18. Verfahren zur Herstellung einer verträglich gemachten Mischung von Polymeren nach Anspruch 17, dadurch gekennzeichnet, daß das Schmelzmischen der Mischung der drei polymeren Bestandteile in zwei Stufen ausgeführt wird.

19. Verfahren nach Anspruch 17, dadurch gekennzeichnet, daß das Schmelzmischen in einem Extruder ausgeführt wird.

20. Verfahren nach Anspruch 19, dadurch gekennzeichnet, daß die drei Zonen des Extruders auf folgenden Temperaturen gehalten werden: (a) Einfülltrichterzone bei einer Temperatur von 160-165°C, (b) Schmelzzone bei einer Temperatur von 165-170°C und (c) Düsenzone bei einer Temperatur von 170-175°C.

## Revendications

1. Mélange de polymères à constituants rendus compatibles, qui comprend (a) un interpolymère de chlorure de vinylidène et (b) un polymère d'oléfine dans un rapport pondéral (a)/(b) de 9:1 à 1:9, et une quantité apportant la compatibilité de 2 à 35 parties en poids, par 100 parties de (a) + (b), d'un polymère apportant la compatibilité, mélange dans lequel l'interpolymère (a) contient à l'état polymérisé du chlorure de vinylidène en une proportion de 40 à 98% en poids de l'interpolymère et au moins un monomère à insaturation monoéthylénique copolymérisable avec lui en une proportion de 60 à 2% en poids de l'interpolymère, le dit polymère apportant la compatibilité (c) est choisi parmi (i) les interpolymères d'éthylène contenant à l'état polymérisé de 97 à 60% en poids d'éthylène et de 3 à 40% en poids d'au moins un produit oxygéné copolymérisable avec celui-ci et (ii) les polymères d'oléfine contenant un halogène chimiquement fixé à eux en une proportion de 24 à 44% en poids du polymère, avec la condition supplémentaire que, si le polymère apportant la compatibilité (c) est un polymère acide/acrylique éthylène modifié à l'éthyloxazoline, alors que ledit polymère, avant modification, comporte une teneur en acide acrylique polymérisé qui est supérieure à 3% en poids, mais inférieure à 20% en poids du polymère non modifié et le rapport du polymère de chlorure de vinylidène au polyéthylène basse densité est supérieur à 1/1.

2. Mélange à constituants rendus compatibles de la revendication 1, dans lequel les polymères d'oléfine de (b) sont choisis parmi (1) un polyéthylène de basse densité, (2) un polyéthylène de densité moyenne, (3) un polyéthylène de haute densité, (4) un polypropylène, (5) un polybutylène-1, (6) des interpolymères en général linéaires d'éthylène contenant à l'état polymérisé de 2 à 98% en poids d'éthylène et de 98 à 2% en poids d'au moins un alcène-1, ledit alcène comportant de 3 à 18 atomes de carbone, (7) des interpolymères de deux ou plus de deux alpha-oléfines ayant de 3 à 18 atomes de carbone par molécule, et (8) des interpolymères caoutchouteux éthylène-propylène (monomère diénique), et leurs mélanges.

3. Mélange à constituants rendus compatibles selon la revendication 1, présentant un rapport (a)/(b) de 9:1 à 3:1.

4. Mélange à constituants rendus compatibles selon la revendication 1, dans lequel le monomère copolymérisable avec le chlorure de vinylidène est choisi parmi le chlorure de vinylidène, les acrylates d'alkyle, les méthacrylates d'alkyle, l'acide acrylique, l'acide méthacrylique, l'acide itaconique, l'acrylonitrile et le méthacrylonitrile.

5. Mélange à constituants rendus compatibles selon la revendication 1, dans lequel l'interpolymère de chlorure de vinylidène contient à l'état polymérisé du chlorure de vinylidène en une proportion de 89 à 95% en poids de l'interpolymère et de l'acrylate de méthyle en une proportion de 11 à 5% en poids de l'interpolymère.

6. Mélange à constituants rendus compatibles selon la revendication 2, dans lequel le polymère d'oléfine de (b) est un polyéthylène basse densité, ce polyéthylène basse densité présentant une masse volumique de 0,917 à 0,929 g/cm³ et un indice de fluidité à l'état fondu, mesuré selon l'essai D-1238 de l'ASTM, de 0,1 à 20 g par 10 minutes.

7. Mélange à constituants rendus compatibles selon la revendication 2, dans lequel le polymère d'oléfine de (b) est un polyéthylène de densité moyenne, le polyéthylène de densité moyenne ayant une masse volumique de 0,930 à 0,939 g/cm³ et un indice de fluidité à l'état fondu, mesuré selon l'essai D-1238 de l'ASTM, de 0,08 à 100 g/10 minutes.

8. Mélange à constituants rendus compatibles selon la revendication 2, dans lequel le polymère d'oléfine de (b) est un polyéthylène haute densité, le polyéthylène haute densité ayant une masse volumique de 0,940 à 0,965 g/cm³ et un indice de fluidité à l'état fondu, mesuré selon l'essai D-1238 de l'ASTM, de 0,08 à 100 g par 10 minutes.

9. Mélange à constituants rendus compatibles selon la revendication 2, dans lequel le polymère d'oléfine de (b) est un copolymère linéaire d'éthylène et d'au moins un alcène-1, le copolymère contenant à l'état polymérisé de l'éthylène à raison de 80 à 98% en poids d'un copolymère et un ou plusieurs alcène-1 en une proportion totale de 20 à 2% en poids du copolymère.

10. Mélange à constituants rendus compatibles selon la revendication 2, dans lequel le polymère d'oléfine de (b) est un copolymère d'éthylène et d'au moins un monomère copolymérisable avec lui, ce monomère étant choisi parmi les monomères alpha-oléfiniques comportant de 3 à 18 atomes de carbone par molécule.

11. Mélange à constituants rendus compatibles selon la revendication 1, dans lequel le polymère apportant la compatibilité est choisi parmi (a) les interpolymères d'éthylène contenant à l'état polymérisé de 97 à 60% en poids d'éthylène et de 3 à 40% en poids d'au moins un monomère acide carboxylique à insaturation éthylénique copolymérisable avec lui, l'interpolymère étant estérifié après sa préparation, (b) des copolymères d'éthylène et d'au moins un acrylate d'alkyle, l'acrylate d'alkyle comportant de 1 à 8 atomes de carbone par groupe alkyle, (c) des copolymères d'éthylène et d'au moins un méthacrylate d'alkyle, le méthacrylate d'alkyle comportant de 1 à 8 atomes de carbone par groupe alkyle, (d) des copolymères d'éthylène et de monoxyde de carbone, (e) des interpolymères d'éthylène, de monoxyde de carbone, et de (1) un ester d'un acide carboxylique à insaturation éthylénique ou (2) l'acétate de vinyle, (f) des copolymères d'éthylène et d'acétate de vinyle et (g) des copolymères éthylène/acide acrylique modifiés à l'éthyle-oxazoline.

12. Mélange à constituants rendus compatibles selon la revendication 1, dans lequel le polymère apportant la compatibilité est choisi parmi (a) des copolymères d'éthylène et d'au moins un acrylate d'alkyle, l'acrylate d'alkyle comportant de 1 à 4 atomes de carbone par groupe alkyle, (b) des copolymères d'éthylène et d'au moins un méthacrylate d'alkyle, le méthacrylate d'alkyle comportant de 1 à 4 atomes de carbone par groupe alkyle et (c) des copolymères éthylène/acide acrylique modifiés par la 2-éthyl-2-oxazoline.

13. Mélange à constituants rendus compatibles selon la revendication 1, dans lequel le polymère apportant la compatibilité est un copolymère d'éthylène et d'acrylate de méthyle, le copolymère contenant à l'état polymérisé l'éthylène en une proportion de 95 à 80% en poids du copolymère et l'acrylate de méthyle en une proportion de 5 à 20% en poids du copolymère.

14. Mélange à constituants rendus compatibles selon la revendication 1, ledit mélange possédant une énergie d'impact supérieure à l'énergie d'impact d'un mélange de l'interpolymère de chlorure de vinylidène et du polymère d'oléfine.

15. Mélange à constituants rendus compatibles selon la revendication 1, dans lequel ledit polymère d'oléfine de (b) est un copolymère d'éthylène et d'au moins une alpha-oléfine.

16. Mélange de polymères à constituants rendus compatibles selon la revendication 1, possédant un taux de perméabilité à l'oxygène inférieur à 1,76, mesuré comme le produit des cm³ d'oxygène par les cm de l'épaisseur de l'échantillon, le tout divisé par le produit de (a) la surface en cm², (b) le temps en secondes et (c) la pression barométrique exprimée en 13,33 mbar (cm de mercure).

17. Procédé de préparation d'un mélange de polymères à constituants rendus compatibles, comprenant (a) un interpolymère de chlorure de vinylidène et (b) un polymère oléfinique dans un rapport pondéral (a)/(b) de 9:1 à 1:9, et une quantité apportant la compatibilité de 2 à 35 parties en poids, par 100 parties de (a) + (b), d'un polymère apportant la compatibilité (c), mélange dans lequel l'interpolymère (a) contient à l'état polymérisé du chlorure de vinylidène en une proportion de 40 à 98% en poids de l'interpolymère et au moins un monomère à insaturation monoéthylénique copolymérisable avec lui à raison de 60 à 2% en poids de l'interpolymère, ledit polymère apportant la compatibilité (c) est choisi parmi (i) les interpolymères d'éthylène contenant à l'état polymérisé de 97 à 60% en poids d'éthylène et de 3 à 40% en poids d'au moins un produit contenant de l'oxygène copolymérisable avec celui-ci et (ii) les polymères d'oléfine portant un halogène chimiquement fixé à eux en une proportion de 24 à 44% en poids du polymère, avec la

45

condition supplémentaire que, si le polymère apportant la compatibilité (c) est un polymère éthylène, acide acrylique modifié à l'éthyloxazoline, alors ledit polymère, avant modification, possède une teneur en acide acrylique polymérisé supérieure à 3% en poids, mais inférieure à 20% en poids du polymère non modifié et le rapport du polymère de chlorure de vinylidène au polyéthylène basse densité est supérieur à 1:1, caractérisé en ce que l'association des trois composants polymères (a), (b) et (c) est mélangée à l'état fondu à une température inférieure à celle à laquelle la décomposition de l'interpolymère de chlorure de vinylidène devient notable et sous un cisaillement suffisant pour fournir un mélange visuellement homogène en un temps de malaxage raisonnable.

18. Procédé de préparation d'un mélange de polymères à constituants rendus compatibles selon la revendication 17, caractérisé en ce que le mélange à l'état fondu de l'association desdits trois composants polymères a lieu en deux étapes.

19. Procédé selon la revendication 17, caractérisé en ce qu'on effectue le mélange à l'état fondu dans une extrudeuse.

20. Procédé selon la revendication 19, caractérisé en ce que on maintient les trois zones de l'extrudeuse aux températures suivantes: (a) zone de trémie à une température de 160–165°C, (b) zone de fusion à une température de 165 à 170°C et (c) zone de filière à une température de 170 à 175°C.